# FASCICULE DE BREVET EUROPEEN

(11) **EP 2 232 308 B1**
(45) Date de publication et mention de la délivrance du brevet: **28.11.2012**
(21) Numéro de dépôt: 08862888.8
(22) Date de dépôt: 05.12.2008
(51) Int. Cl.: G02B 23/14, G01S 7/481, G02B 27/14

(54) **SYSTEME D'IMAGERIE LASER**
BILDGEBENDES LASERSYSTEM
LASER IMAGING SYSTEM

(30) Priorité: 18.12.2007 FR 0708840; 28.03.2008 FR 0801711
(43) Date de publication de la demande: 29.09.2010
(73) Titulaire: THALES, 92200 Neuilly-sur-Seine (FR)
(72) Inventeur: DOITTAU, François-Xavier, F-78910 Behoust/Orgerus (FR); POCHOLLE, Jean-Paul, F-91290 La Norville (FR)
(74) Mandataire: Esselin, Sophie
(86) Numéro de dépôt international: PCT/EP2008/066938
(87) Numéro de publication internationale: WO 2009/077361

(56) Documents cités:
- WO-A-2006/110009
- FR-A- 2 505 505
- GB-A- 1 378 852
- JP-A- 2004 147 826
- US-A- 3 574 467

## Description

L'invention se rapporte à un système d'imagerie laser.

### ETAT DE LA TECHNIQUE

Dans les systèmes de traitement de cibles par faisceaux optiques lasers, on a besoin de diriger précisément le faisceau laser. On peut donc avoir besoin de connaître précisément le point d'impact du faisceau de traitement sur la cible.

Pour cela, il est connu d'utiliser des systèmes d'imagerie permettant d'avoir une image de la cible et du point d'impact du faisceau de traitement sur la cible. Le système peut alors modifier l'orientation du faisceau de traitement en fonction de l'image obtenu.

Pour réaliser cette imagerie, les systèmes connus utilisent généralement un séparateur de faisceau qui permet de transmettre le faisceau de traitement vers la cible, qui reçoit de la lumière réfléchie de la cible et qui réfléchit cette lumière vers un dispositif d'acquisition d'images.

L'inconvénient de tels systèmes est que le séparateur introduit des pertes dans le trajet du faisceau de traitement ou ne supporte pas l'éclairement appliqué.

L'invention permet de résoudre cet inconvénient.

L'invention a pour objet un système de réflexion permettant d'utiliser les mêmes optiques pour la transmission du faisceau de traitement et pour l'imagerie. Elle a également pour objet un procédé de fabrication d'un tel système de réflexion. Elle concerne également une architecture d'imagerie optique appliquant le système de réflexion optique selon l'invention.

### RESUME DE L'INVENTION

L'invention comporte un miroir pour imagerie optique. Ce miroir comporte un dispositif de réflexion possédant une face réfléchissante. Ledit dispositif de réflexion incorpore un dispositif d'émission lumineuse dont une extrémité d'émission est située au niveau de ladite face réfléchissante dans une zone qui est peu ou n'est pas réfléchissante.

Le dispositif d'émission peut être une fibre optique émettrice ou un assemblage de plusieurs fibres optiques émettrices dont une extrémité affleure à ladite face réfléchissante. La surface de ladite extrémité constitue ladite zone peu ou pas réfléchissante. La face réfléchissante et la surface de ladite extrémité sont dans un même plan et sont inclinées par rapport à l'axe de la fibre optique émettrice ou de l'assemblage de plusieurs fibres optiques émettrices.

Ledit dispositif de réflexion est en matériau à base de verre ou matériau synthétique.

Ledit dispositif de réflexion peut comporter un assemblage de fibres optiques qui enserrent la fibre optique émettrice (ou ledit assemblage de plusieurs fibres optiques émettrices).

Ledit dispositif de réflexion comporte une face revêtue d'un réseau de diffraction en volume, lequel comporte un trou dans ladite zone pour le passage de l'extrémité d'émission du dispositif d'émission lumineuse.

Un procédé de réalisation du miroir tel que décrit précédemment. Ce procédé comporte les étapes suivantes:
- mise en place de la fibre optique émettrice ou de l'assemblage de plusieurs fibres optiques émettrices dans ledit dispositif de réflexion,
- usinage dudit dispositif de réflexion pour obtenir une face transverse par rapport à la fibre optique émettrice (ou à l'assemblage de plusieurs fibres optiques émettrices),
- traitement réfléchissant de ladite face transverse pour réaliser ladite face réfléchissante,
- transmission d'un faisceau optique énergétique par ladite fibre optique émettrice (ou de l'assemblage fibres optiques émettrices) pour détériorer le traitement réfléchissant dans la zone de la face réfléchissante correspondant à la zone d'émission de la fibre optique émettrice (ou de l'assemblage fibres optiques émettrices).

L'étape de mise en place de ladite fibre optique émettrice (ou de l'assemblage fibres optiques émettrices) dans ledit dispositif de réflexion se fait par moulage.

L'étape de mise en place dans ledit dispositif de réflexion se fait par mise en place de ladite fibre optique émettrice (ou de l'assemblage fibres optiques émettrices) au sein d'un ensemble de fibres puis par solidarisation des fibres entre elles.

L'invention a pour objet un système d'imagerie optique selon la revendication 1 appliquant le miroir décrit précédemment.

Dans ce système d'imagerie ladite fibre optique émettrice (ou l'assemblage de fibres optiques émettrices) est destinée à émettre un faisceau lumineux de traitement vers une première zone d'une cible. Ce système d'imagerie comporte:
- une source lumineuse d'imagerie émettant un faisceau lumineux d'imagerie qui est destiné à éclairer ladite cible selon une deuxième zone de surface supérieure à ladite première zone et englobant cette première zone,
- un appareil de prise de vues orienté vers ladite face réfléchissante constituant un premier miroir et destinée à recevoir de la lumière réfléchie par ladite cible vers ce premier miroir.

Selon une variante de l'invention, le système d'imagerie optique comporte en outre un ensemble optique situé entre la fibre optique émettrice et ledit premier miroir, cet ensemble optique ayant pour objet de réaliser la fonction de focalisation sur le miroir permettant se désolidariser la source lumineuse émettrice dudit premier miroir.

Selon une variante de l'invention cet ensemble optique comporte deux lentilles de grandissement variable.

Selon une variante de réalisation, ce système d'imagerie peut comporter également:
- au moins un deuxième miroir recevant ledit faisceau de traitement, le réfléchissant en vue d'éclairer la première zone, ce dit deuxième miroir permettant d'orienter ledit faisceau d'éclairement vers ladite première zone de la cible,
- un système de commande permettant de commander l'orientation du deuxième miroir en fonction d'une image reçue par l'appareil de prise de vue.

Selon une autre variante de réalisation, ce système d'imagerie peut comporter un troisième miroir destiné réfléchir vers ladite cible la lumière reçue du deuxième miroir, ou inversement à réfléchir vers le deuxième miroir la lumière reçue de la cible, ledit système de commande permettant de commander l'orientation de ce troisième miroir en fonction de l'image reçue par l'appareil de prise de vue pour permettre de régler la focalisation du faisceau reçu du deuxième miroir.

Selon une autre variante de réalisation, ce système d'imagerie peut comporter un quatrième miroir recevant la lumière reçue du premier miroir et la réfléchissant vers l'appareil de prise de vues.

Selon une forme de réalisation de ce système d'imagerie selon l'invention, ledit faisceau lumineux de traitement est à une première longueur d'onde ou gamme de longueurs d'ondes, ledit faisceau lumineux d'imagerie est à une deuxième longueur d'onde ou gamme de longueurs d'ondes différentes de la première longueur d'onde ou gamme de longueurs d'ondes, le système comportant en outre un filtre spectral situé entre le premier miroir et l'appareil de prise de vue et permettant la transmission de la deuxième longueur d'onde ou gamme de longueurs d'ondes seulement à l'appareil de prise de vues.

L'invention a également pour objet un système de commande de plusieurs sources lumineuses appliquant le système d'imagerie ainsi décrit. Ce système comporte au moins deux sources lasers. Chaque source laser comporte un système de pointage indépendant. Le système de commande comporte en outre un circuit de commande centrale permettant de commander les systèmes de pointage de chaque source laser.

### BREVE DESCRIPTION DES FIGURES

- Les différents objets et caractéristiques de l'invention apparaîtront plus clairement dans la description qui va suivre et dans les figures annexées qui représentent:
- la figure 1, un exemple de réalisation d'un miroir pour imagerie optique,
- les figures 2a et 2b, un exemple de procédé de réalisation du miroir de la figure 1,
- les figures 3a et 3b, une variante de réalisation du procédé de réalisation,
- la figure 4, une variante de réalisation du miroir pour imagerie optique selon l'invention,
- la figure 5, un exemple de miroir associé à un ensemble optique permettant de préserver l'extrémité de la fibre optique émettrice contre toute pollution par dépôt métallique,
- la figure 6, un système de pointage optique appliquant le miroir selon l'invention,
- la figure 7, une application du système de l'invention à la commande de plusieurs sources lumineuse,

### DESCRIPTION DETAILLEE

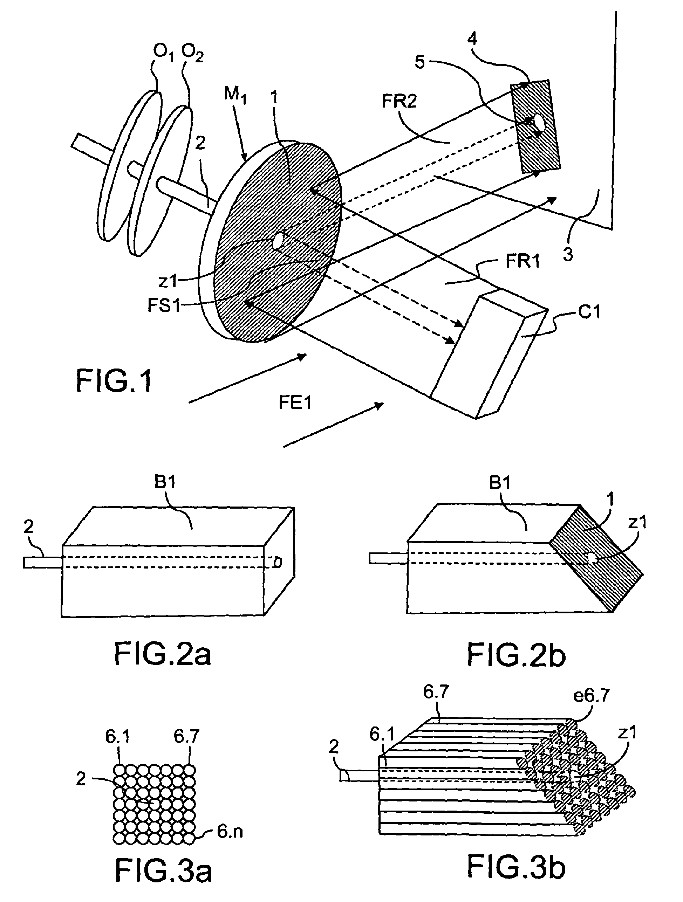

En se reportant à la figure 1, on va donc décrire tout d'abord un exemple de réalisation d'un miroir pour imagerie optique.

Le miroir M1 est un bloc possédant une surface réflectrice 1. La surface 1 est munie d'une zone z1 non réflectrice ou peu réflectrice comparée à l'ensemble de la surface 1. Dans ces conditions une source optique peut émettre un faisceau lumineux à travers cette zone z1. En revanche, la lumière incidente sur le miroir M1 est réfléchie par la surface réflectrice 1 sauf par la zone z1.

La figure 1 représente également un mode de fonctionnement simplifié du miroir M1.

A titre d'exemple, une fibre optique 2 traverse le miroir M1 et elle possède une extrémité d'émission qui est située dans la zone z1.

Selon l'exemple de réalisation de la figure 1, la fibre optique 2 émet un faisceau FS1 vers une zone localisée d'une cible C1.

Par ailleurs la cible C1 est éclairée par un faisceau lumineux d'imagerie FE1. En échange, la cible C1 réfléchit un faisceau FR1. Celui-ci est réfléchi par la surface 1 du miroir M1 sous la forme du faisceau FR2 vers un dispositif de prise de vues 3. L'image affichée 4 est donc l'image de la cible. De plus, la portion du faisceau FR1 qui atteint le miroir dans la zone z1 n'est pas (ou pratiquement pas) réfléchie par le miroir M1. On a donc, dans l'image 4 de la cible, une zone 5 moins lumineuse. Cette zone correspond à l'impact du faisceau FS1 sur la cible.

Le système d'imagerie de la figure 1 permet donc de visualiser la zone d'impact sur la cible C1 du faisceau FS1 émis par la fibre optique 2. En visualisant l'image 4 obtenue par le dispositif de prise de vues, un opérateur ou un système de traitement d'image peut donc modifier la zone d'impact sur la cible en modifiant l'orientation et/ou la focalisation du faisceau FS1.

Les figures 2a et 2b illustrent un exemple de procédé de réalisation du miroir M1 de la figure 1.

Au cours d'une première étape, la fibre optique 2 est noyée dans un bloc B1. Avantageusement, ce bloc peut être en verre (ou en saphir /nitrure pour les propriétés thermiques de ces matériaux) ou en résine synthétique.

Au cours d'une deuxième étape, le bloc est usiné de façon à réaliser la face 1 inclinée par rapport à l'axe de la fibre. Une extrémité de la fibre affleure donc à la surface de la face 1. Avantageusement, la face 1 et l'axe de la fibre 2 font un angle de 45 degrés.

Au cours d'une troisième étape, un traitement réfléchissant est réalisé sur la face 1. Par exemple, la face 1 est revêtue d'une couche métallisée.

Au cours d'une quatrième étape, la zone z1 non réfléchissante ou faiblement réfléchissante est réalisée à l'emplacement de l'extrémité d'affleurement de la fibre optique 2. Avantageusement, cette zone z1 est réalisée en transmettant par la fibre optique un faisceau lumineux suffisamment énergétique pour détruire le traitement réfléchissant de la face 1 dans cette zone z1.

Les figures 3a et 3b illustrent une variante du procédé de réalisation du miroir selon l'invention.

Au cours d'une première étape, la fibre 2 est placée à l'intérieur d'un ensemble de fibres 6.1 à 6.n et l'ensemble est rendu solidaire. Par exemple, les différentes fibres sont collées entre elles ou font l'objet d'un recuit.

Au cours d'une deuxième étape, cet ensemble de fibres est usiné de façon à réaliser une face plane inclinée par rapport à l'axe de la fibre. Les extrémités des fibres, telle que l'extrémité e6.7 de la fibre 6.7 affleurent donc dans ce plan. En particulier, une extrémité de la fibre 2 affleure donc à la surface de ce plan. Comme précédemment, avantageusement cette face et l'axe de la fibre 2 font un angle de 45 degrés (même observation que précédemment).

Au cours d'une troisième étape, un traitement réfléchissant est réalisé sur les extrémités des fibres telles que l'extrémité e6.7. Par exemple, les extrémités des fibres sont revêtues d'une couche métallisée.

Au cours d'une quatrième étape, l'extrémité de la fibre 2, qui correspond à la zone z1 dans la description qui précède, est rendue non réfléchissante ou faiblement réfléchissante. Par exemple, si cette extrémité a été rendue réfléchissante comme les autres extrémités de fibres lors de l'étape précédente, un faisceau lumineux suffisamment énergétique est transmis par la fibre 2 pour détruire le traitement réfléchissant de cette extrémité.

Avantageusement, lors de la première étape (assemblage des fibres), les fibres optiques sont noyées dans une résine qui solidarise les fibres entre elles. Les espaces entre fibres optiques sont donc remplis de résine. La face inclinée du dispositif de la figure 3b est alors une face uniforme qui est rendue entièrement réfléchissante (sauf la zone z1).

Les exemples de réalisation qui précèdent ont été décrits avec une fibre optique 2. Cependant, l'invention est applicable à la réalisation d'un système dans lequel au lieu d'avoir une seule fibre 2, on a un ensemble de plusieurs fibres optiques accolées. La zone z1 correspond à l'ensemble des extrémités d'émission de ces fibres.

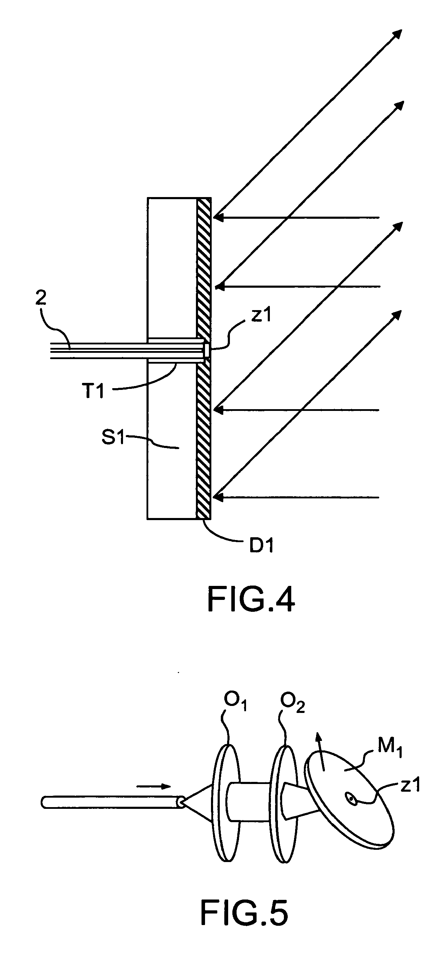

La figure 4 représente une variante de réalisation d'un miroir pour imagerie optique selon l'invention. Il comporte une lame support S1 dont une face est revêtue d'une couche d'un matériau polymère dans laquelle un réseau de diffraction en volume a été enregistré (réseau de Bragg). De plus, un trou T1 traverse la lame support et le réseau de diffraction de façon à permettre la mise en place d'une fibre (ou d'un ensemble de fibres) dont l'extrémité d'émission permette une émission lumineuse par la zone z1.

La figure 5 illustre un ensemble optique est intégré en amont du miroir de manière à protéger la face émettrice de la fibre optique lors de la réalisation de l'ouverture z1 dans la surface réfléchissante. Cet ensemble optique est typiquement constitué de deux lentilles O1 et 02, situées entre la fibre émettrice S1 et le miroir M1. L'éloignement géométrique de la fonction optique façonnée à distance évite une pollution de la face de sortie de la fibre. On réalise ainsi une ouverture auto-centrée, image du point source en éliminant par ablation / par voie thermique la partie du film métallique soumise au flux laser sans modifier ou altérer les propriétés optiques de la face de sortie de la source laser primaire.

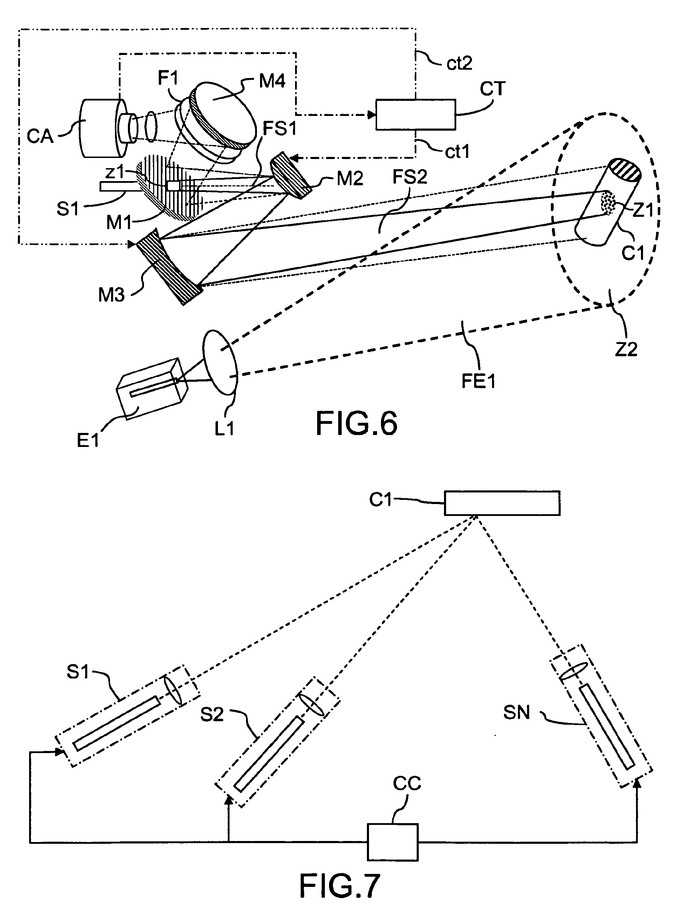

En se reportant à la figure 6, on va maintenant décrire un système de pointage selon l'invention et permettant d'orienter convenablement une source lumineuse.

Une source S1 émet un faisceau lumineux FS1 à travers un premier miroir M1. Ce miroir est tel que celui qui a été décrit précédemment en se reportant à la figure 1. La zone d'émission z1 de ce faisceau lumineux à travers le miroir n'est donc pas réfléchissante ou faiblement réfléchissante.

Un deuxième miroir M2 destiné à orienter le faisceau, réfléchit celui-ci vers un troisième miroir M3 qui permet de focaliser le faisceau vers la zone Z1 à traiter de la cible C1.

Une source de réglage de pointage E1 émet un faisceau lumineux FE1 qui éclaire la cible C1 selon une zone d'éclairement Z2 de surface. Cette zone z2 possède une surface nettement supérieure à celle de la zone Z1 et englobe celle-ci.

Une partie au moins de la lumière du faisceau FE1 est réfléchie par la cible vers le miroir M3 qui la réfléchit vers le miroir M2. Cette lumière est ensuite réfléchie par le miroir M1, puis par un miroir M4 vers un appareil de prise de vues CA.

Cependant, comme cela a été précisé précédemment, la zone z1 du miroir M1 par lequel le faisceau FS1 a été émis est peu réfléchissante. L'appareil de prise de vues CA reçoit donc une image de la cible dans laquelle l'image de la zone Z1 éclairée par le faisceau FS2 apparaît moins lumineuse ou de couleur différente que le reste de l'image de la cible. L'image obtenue par l'appareil de prise de vues permet ainsi de localiser l'emplacement de la zone Z1 qui est éclairée par le faisceau FS2.

Cette image est transmise à un circuit de traitement CT qui identifie la dimension de la zone Z1 éclairée et sa position sur la cible. Le circuit de traitement CT peut alors commander, par la liaison ct1, l'orientation du miroir M2 pour modifier la direction du faisceau FS2. Il peut également commander, par la liaison ct2, le miroir M3 pour effectuer un réglage de la focalisation.

Avantageusement, les longueurs d'ondes émises par les sources S1 et E1 sont de valeurs différentes. Notamment, la longueur d'onde émise par la source E1 n'est pas contenue dans la gamme de longueurs d'ondes de la source S1. L'invention prévoit alors un filtre spectral F1 qui permet le passage de la longueur d'onde (ou de la gamme de longueurs d'ondes) émise par la source E1 vers l'appareil de prise de vues. On diminue ainsi les risques de retours de longueurs d'ondes du faisceau FS2 et réfléchies par la cible pour éviter de détériorer l'image captée par l'appareil de prise de vues.

Par exemple, la longueur d'onde d'émission de la source E1 pourra être de 1,5 micromètre et la source S1 pourra émettre autour de 1,08 micromètre.

L'invention est avantageusement applicable à un système de traitement par faisceau laser dans lequel le faisceau FS1 émis par la fibre 2 (ou un ensemble de fibres) a pour objet d'effectuer un traitement sur une cible distante (figure 1)

Elle est également applicable à un système faisant intervenir plusieurs sources lasers commandables indépendamment les unes des autres en orientation et en focalisation. Par exemple, elle est applicable à un système dans lequel les sources lasers sont localisées dans des emplacements géographiquement différents.

La figure 7 représente un agencement de sources lumineuses appliquant le système de l'invention. Chaque source lumineuse S1, S2 ..., SN comporte une source laser à fibres optiques et au moins une optique de focalisation.

Un circuit de commande central CC permet de commander une pré-orientation et une pré-focalisation de chaque source lumineuse de façon que les différents faisceaux émis par ces sources soient sensiblement dirigés vers une même zone d'une cible C1 à traiter. Ce pré-pointage se fait à partir de données fournies par un système d'imagerie IR qui couvre un champ de 1 à 3 degrés avec une précision de l'ordre de 500 µradians pour un écart type à 3σ.

Selon l'invention, chaque source lumineuse, telles que les sources S1 à SN de la figure 7, possède en outre un système de pointage ainsi décrit en relation avec la figure 5. Dans ce cas, le circuit de commande central CC de la figure 7 permet de réaliser une première étape d'orientation des différentes sources S1 à SN. Ensuite, les circuits de traitement CT commandent une orientation plus précise des faisceaux émis par les différentes sources S1 à SN.

Selon cet agencement, les différentes sources peuvent donc être disposées n'importe où spatialement par rapport à la cible.

Avantageusement, chaque source est équipée dans un boîtier individuel. Ce type d'architecture permet ainsi une conception modulaire optimale.

Selon une variante de réalisation, l'invention prévoit également d'équiper les sources lasers d'un système de pointage, tel que celui de la figure 5, qui permette de diriger les différents faisceaux lumineux vers la zone Z1 de la cible C1.

Avantageusement, ces systèmes de pointage coopèrent avec le circuit de commande central CC.

Si chacune de ces voies est équipée d'un capteur d'imagerie active à une longueur d'onde proche, 1,5 micromètre par exemple, il est possible de régler en temps réel la focalisation et le pointage fin ce qui permet de traiter simultanément les problèmes d'asservissement et de correction des effets des turbulences atmosphériques afin d'optimiser le dépôt d'énergie sur la cible.

## Revendications

1. Système d'imagerie laser d'une cible (C1) comprenant un dispositif d'émission lumineuse (2) et un dispositif de réflexion (M1), **caractérisé en ce que** :
- ladite cible étant éclairée par un faisceau d'imagerie (FE1) ;
- ledit système comprenant un dispositif de prise de vue (3) ;
- ledit dispositif de réflexion comporte une face revêtue d'un réseau de diffraction en volume, ledit dispositif de réflexion comportant un trou dans une zone (z1) pour le passage de l'extrémité d'émission du dispositif d'émission lumineuse (2) en direction de ladite cible (C1) pour fournir un faisceau (FS1) en direction de ladite cible et ledit dispositif de réflexion étant destiné à réfléchir ledit faisceau d'imagerie (FE1) en un faisceau réfléchi (FR2) en direction dudit dispositif de prise de vue (3), depuis un faisceau (FR1) réfléchi par ladite cible.

2. Système d'imagerie laser selon la revendication 1, **caractérisé en ce que** le dispositif d'émission (2) est une fibre optique émettrice ou un assemblage de plusieurs fibres optiques émettrices dont une extrémité affleure à ladite face réfléchissante (1), la surface de ladite extrémité constituant ladite zone (z1) peu ou pas réfléchissante, la face réfléchissante et la surface de ladite extrémité étant dans un même plan et étant inclinées par rapport à l'axe de la fibre optique émettrice ou de l'assemblage de plusieurs fibres optiques émettrices.

3. Système d'imagerie laser selon la revendication 2, **caractérisé en ce que** ledit dispositif de réflexion comporte un assemblage de fibres optiques (6.1 à 6.n) qui enserrent la fibre optique émettrice (ou ledit assemblage de plusieurs fibres optiques émettrices).

4. Système d'imagerie laser selon la revendication 3, **caractérisé en ce que** ladite fibre optique émettrice (ou l'assemblage de fibres optiques émettrices) est destinée à émettre un faisceau lumineux de traitement (FS1) vers une première zone (Z1) de ladite cible (C1) et **en ce que** le système comporte :
- une source lumineuse d'imagerie (E1) émettant un faisceau lumineux d'imagerie (FE1) qui est destiné à éclairer ladite cible selon une deuxième zone (Z2) de surface supérieure à ladite première zone (Z1) et englobant cette première zone,
- un appareil de prise de vues (CA) orienté vers ladite face réfléchissante constituant un premier miroir (M1) et destinée à recevoir de la lumière réfléchie par ladite cible vers ce premier miroir (M1).

5. Système d'imagerie laser selon l'une des revendications 1 à 3, **caractérisé en ce que** ledit dispositif de réflexion est en matériau à base de verre ou de matériau synthétique.

6. Système d'imagerie laser selon l'une des revendications 1 à 5, **caractérisé en ce qu'**il comporte un ensemble optique imageur situé entre ladite fibre optique émettrice et ledit dispositif de réflexion en assurant la création d'une pupille, image du point source et auto-centré.

7. Système d'imagerie laser selon la revendication 6, **caractérisé en ce que** l'ensemble optique imageur comporte une ou une pluralité de lentilles permettant de réaliser la fonction de grandissement de faisceau selon l'application visée.

8. Système d'imagerie laser selon l'une des revendications 1 à 7, **caractérisé en ce qu'**il comporte également:
- au moins un deuxième miroir (M2) recevant ledit faisceau de traitement, le réfléchissant en vue d'éclairer la première zone (Z1), ce dit deuxième miroir permettant d'orienter ledit faisceau d'éclairement vers ladite première zone de la cible ;
- un système de commande permettant de commander l'orientation du deuxième miroir en fonction d'une image reçue par l'appareil de prise de vues (CA).

9. Système d'imagerie laser selon la revendication 8, **caractérisé en ce qu'**il comporte un troisième miroir (M3) destiné à réfléchir vers ladite cible (C1) la lumière reçue du deuxième miroir (M2), ou inversement à réfléchir vers le deuxième miroir la lumière reçue de la cible, ledit système de commande permettant de commander l'orientation de ce troisième miroir en fonction de l'image reçue par l'appareil de prise de vue (CA) pour permettre de régler la focalisation du faisceau reçu du deuxième miroir (M2).

10. Système d'imagerie laser selon la revendication 9, **caractérisé en ce qu'**il comporte un quatrième miroir (M4) recevant la lumière reçue du premier miroir (M1) et la réfléchissant vers l'appareil de prise de vues (CA).

11. Système d'imagerie laser selon l'une quelconque des revendications 1 à 10, **caractérisé en ce que** ledit faisceau lumineux de traitement (FS1) est à une première longueur d'onde ou gamme de longueurs d'ondes, ledit faisceau lumineux d'imagerie (FE1) est à une deuxième longueur d'onde ou gamme de longueurs d'ondes différentes de la première longueur d'onde ou gamme de longueurs d'ondes, le système comportant en outre un filtre spectral (F1) situé entre le premier miroir (M1) et l'appareil de prise de vue (CA) et permettant la transmission de la deuxième longueur d'onde ou gamme de longueurs d'ondes seulement à l'appareil de prise de vues.

12. Système de commande de plusieurs sources lumineuses appliquant le système d'imagerie selon l'une quelconque des revendications 1 à 11, **caractérisé en ce qu'**il comporte au moins deux sources lasers (S1 à SN) et **en ce que** chaque source laser comporte un système de pointage indépendant, le système de commande comportant en outre un circuit de commande centrale (CC) permettant de commander les systèmes de pointage de chaque source laser.

## Claims

1. A laser imaging system for a target (C1), comprising a light emission device (2) and a reflection device (M1), **characterised in that**:
- said target is illuminated by an imaging beam (FE1);
- said system comprises an image capturing device (3);
- said reflection device comprises a face that is coated with a volume diffraction grating, said reflection device comprising a hole in a zone (z1) for the end of the emission from the light emission device (2) to pass through towards said target (C1) so as to deliver a beam (FS1) towards said target and said reflection device being designed to reflect said imaging beam (FE1) as a reflected beam (FR2) towards said image capturing device (3) from a beam (FR) reflected by said target.

2. The laser imaging system according to claim 1, **characterised in that** said emission device (2) is an emitting optical fibre or an assembly of emitting optical fibres, one end of which is flush with a reflective surface (1), the surface of said end constituting said low-reflective or non-reflective zone (z1), said reflective surface and said surface of said end being in the same plane and being inclined relative to the axis of the emitting optical fibre or the assembly of emitting optical fibres.

3. The laser imaging system according to claim 2, **characterised in that** said reflection device comprises an assembly of emitting optical fibres (6.1 to 6.n) that surrounds the emitting optical fibre (or said assembly of emitting optical fibres).

4. The laser imaging system according to claim 3, **characterised in that** said emitting optical fibre (or said assembly of emitting optical fibres) is designed to emit a processing light beam (FS1) towards a first zone (Z1) of said target (C1) and **in that** the system comprises:
- an imaging light source (E1) emitting an imaging light beam (FE1) that is designed to illuminate said target in a second zone (Z2) having a surface area that is greater than said first zone (Z1) and which includes said first zone;
- an image capturing device (CA), oriented towards said reflective surface, constituting a first mirror (M1) and designed to receive light reflected by said target towards said first mirror (M1).

5. The laser imaging system according to any one of claims 1 to 3, **characterised in that** said reflection device is a glass based or synthetic material.

6. The laser imaging system according to any one of claims 1 to 5, **characterised in that** it comprises an imaging optical assembly that is located between said emitting optical fibre and said reflection device that ensures the creation of a pupil that is an image of the source point and is self-centred.

7. The laser imaging system according to claim 6, **characterised in that** the imaging optical assembly comprises one or a plurality of lenses that allow the beam expansion function to be carried out according to the intended application.

8. The laser imaging system according to any one of claims 1 to 7, **characterised in that** it further comprises:
- at least one second mirror (M2) receiving said processing beam, reflecting said processing beam so as to illuminate said first zone (Z1), said second mirror allowing said illuminating beam to be oriented towards said first zone of the target;
- a control system that allows the control of the orientation of said second mirror as a function of an image received by said image capturing device (CA).

9. The laser imaging system according to claim 8, **characterised in that** it comprises a third mirror (M3) that is designed to reflect the light received from said second mirror (M2) towards said target (C1) or, conversely, to reflect the light received from the target to said second mirror, said control system allowing the orientation of said third mirror to be controlled as a function of the image received by said image capturing device (CA) so as to allow the focussing of the beam received from said second mirror (M2) to be controlled.

10. The laser imaging system according to claim 9, **characterised in that** it comprises a fourth mirror (M4) receiving the light received from said first mirror (M1) and reflecting said light towards said image capturing device (CA).

11. The laser imaging system according to any one of claims 1 to 10, **characterised in that** said processing light beam (FS1) has a first wavelength or range of wavelengths, said imaging light beam (FE1) having a second wavelength or range of wavelengths that differs from said first wavelength or range of wavelengths, the system further comprising a spectral filter (F1) located between said first mirror (M1) and said image capturing device (CA) and allowing the transmission of said second wavelength or range of wavelengths only to said image capturing device.

12. A system for controlling a plurality of light sources applying the imaging system according to any one of claims 1 to 11, **characterised in that** it comprises at least two laser sources (S1 to SN) and **in that** each laser source comprises an independent pointing system, said control system further comprising a central control circuit (CC) allowing the pointing systems of each laser source to be controlled.

## Patentansprüche

1. Bildgebendes Lasersystem eines Ziels (C1), das eine Leuchtvorrichtung (2) und eine Reflexionsvorrichtung (M1) umfasst, **dadurch gekennzeichnet, dass**:
- das Ziel von einem Bilderzeugungsstrahl (FE1) beleuchtet wird;
- das System eine Bilderfassungsvorrichtung (3) umfasst;
- die Reflexionsvorrichtung eine Fläche aufweist, die mit einem Volumen-Diffraktionsgitter beschichtet ist, wobei die Reflexionsvorrichtung ein Loch in einer Zone (z1) für die Passage des Emissionsendes der Leuchtvorrichtung (2) in Richtung auf das Ziel (C1) aufweist, um einen Strahl (FS1) in Richtung des Ziels zu leiten, wobei die Reflexionsvorrichtung die Aufgabe hat, den Bilderzeugungsstrahl (FE1) als reflektierten Strahl (FR2) in Richtung der Bilderfassungsvorrichtung (2) von einem vom Ziel reflektierten Strahl (FR) zu reflektieren.

2. Bildgebendes Lasersystem nach Anspruch 1, **dadurch gekennzeichnet, dass** die Leuchtvorrichtung (2) eine emittierende Glasfaser oder eine Baugruppe von mehreren emittierenden Glasfasern ist, von denen ein Ende mit der reflektierenden Fläche (1) bündig ist, wobei die Oberfläche dieses Endes die wenig oder nicht reflektierende Zone (z1) bildet, wobei die reflektierende Fläche und die Fläche dieses Endes in derselben Ebene liegen und in Bezug auf die Achse der emittierenden Glasfaser oder der Baugruppe von mehreren emittierenden Glasfasern geneigt ist.

3. Bildgebendes Lasersystem nach Anspruch 2, **dadurch gekennzeichnet, dass** die Reflexionsvorrichtung eine Baugruppe von emittierenden Glasfasern (6.1 bis 6.n) umfasst, die die emittierende Glasfaser (oder die Baugruppe von mehreren emittierenden Glasfasern) umgibt.

4. Bildgebendes Lasersystem nach Anspruch 3, **dadurch gekennzeichnet, dass** die emittierende Glasfaser (oder die Baugruppe von emittierenden Glasfasern) so ausgelegt ist, dass sie einen Verarbeitungslichtstrahl (FS1) zu einer ersten Zone (Z1) des Ziels (C1) emittiert, und dadurch, dass das System Folgendes umfasst:
- eine Bilderzeugungslichtquelle (E1), die einen Bilderzeugungslichtstrahl (FE1) emittiert, der so ausgelegt ist, dass er das Ziel in einer zweiten Zone (Z2) beleuchtet, die einen Oberflächenbereich hat, der größer ist als die erste Zone (Z1) und die erste Zone umfasst;
- eine Bilderfassungsvorrichtung (CA), die in Richtung der reflektierenden Fläche orientiert ist und einen ersten Spiegel (M1) bildet und so ausgelegt ist, dass sie vom Ziel in Richtung des ersten Spiegels (M1) reflektiertes Licht empfängt.

5. Bildgebendes Lasersystem nach einem der Ansprüche 1 bis 3, **dadurch gekennzeichnet, dass** die Reflexionsvorrichtung aus einem Material auf Glasbasis oder einem synthetischen Material gefertigt ist.

6. Bildgebendes Lasersystem nach einem der Ansprüche 1 bis 5, **dadurch gekennzeichnet, dass** es einen optischen Bildgenerator umfasst, der sich zwischen der emittierenden Glasfaser und der Reflexionsvorrichtung befindet und eine Pupille erzeugt, die ein Bild des Ausgangspunkts und selbstzentriert ist.

7. Bildgebendes Lasersystem nach Anspruch 6, **dadurch gekennzeichnet, dass** der optische Bildgenerator eine oder mehrere Linsen umfasst, die es zulassen, dass die Strahlenvergrößerungsfunktion gemäß der vorgesehenen Anwendung realisiert wird.

8. Bildgebendes Lasersystem nach einem der Ansprüche 1 bis 7, **dadurch gekennzeichnet, dass** es ferner Folgendes umfasst:
- wenigstens einen zweiten Spiegel (M2), der den Verarbeitungsstrahl empfängt, ihn reflektiert, um die erste Zone (Z1) zu beleuchten, wobei der zweite Spiegel eine Orientierung des Beleuchtungsstrahls in Richtung der ersten Zone des Ziels zulässt;
- ein Steuersystem, das das Steuern der Orientierung des zweiten Spiegels in Abhängigkeit von einem von der Bilderfassungsvorrichtung (CA) empfangenen Bild zulässt.

9. Bildgebendes Lasersystem nach Anspruch 8, **dadurch gekennzeichnet, dass** es einen dritten Spiegel (M3) zum Reflektieren des vom zweiten Spiegel (M2) empfangenen Lichts auf das Ziel (C1) oder umgekehrt zum Reflektieren des vom Ziel empfangenen Lichts auf den zweiten Spiegel umfasst, wobei das Steuersystem die Steuerung der Orientierung des dritten Spiegels in Abhängigkeit von dem von der Bilderfassungsvorrichtung (CA) empfangenen Bild zulässt, so dass die Fokussierung des vom zweiten Spiegel (M2) empfangenen Strahls gesteuert werden kann.

10. Bildgebendes Lasersystem nach Anspruch 9, **dadurch gekennzeichnet, dass** es einen vierten Spiegel (M4) zum Empfangen des vom ersten Spiegel (M1) empfangenen Lichts und zum Reflektieren des Lichts in Richtung der Bilderfassungsvorrichtung (CA) umfasst.

11. Bildgebendes Lasersystem nach einem der Ansprüche 1 bis 10, **dadurch gekennzeichnet, dass** der Verarbeitungslichtstrahl (FS1) eine(n) erste(n) Wellenlänge oder Wellenlängenbereich hat, der Bilderzeugungslichtstrahl (FE1) eine(n) zweite(n) Wellenlänge oder Wellenlängenbereich hat, der sich von der/dem ersten Wellenlänge oder Wellenlängenbereich unterscheidet, wobei das System ferner ein Spektralfilter (F1) umfasst, das sich zwischen dem ersten Spiegel (M1) und der Bilderfassungsvorrichtung (CA) befindet und die Übertragung der/des zweiten Wellenlänge oder Wellenlängenbereichs nur zur Bilderfassungsvorrichtung zulässt.

12. System zum Steuern einer Mehrzahl von Lichtquellen unter Verwendung des bildgebenden Systems nach einem der Ansprüche 1 bis 11, **dadurch gekennzeichnet, dass** es wenigstens zwei Laserquellen (S1 bis SN) umfasst, und dadurch, dass jede Laserquelle ein unabhängiges Zeigesystem umfasst, wobei das Steuersystem ferner eine zentrale Steuerschaltung (CC) umfasst, die die Steuerung der Zeigesysteme jeder Laserquelle zulässt.
